# EUROPÄISCHE PATENTSCHRIFT

(11) **EP 3 649 322 B1**
(45) Veröffentlichungstag und Bekanntmachung des Hinweises auf die Patenterteilung: **28.04.2021**
(21) Anmeldenummer: 18737246.1
(22) Anmeldetag: 03.07.2018
(51) Int. Cl.: F01B 11/00, F01L 21/04, F04B 9/125

(54) **PNEUMATIKMOTOR MIT AKTIVER HUBUMSCHALTUNG**
PNEUMATIC MOTOR COMPRISING ACTIVE STROKE-SWITCHING SYSTEM
MOTEUR PNEUMATIQUE AVEC INVERSION DE COURSE ACTIVE

(30) Priorität: 03.07.2017 DE 102017211269
(43) Veröffentlichungstag der Anmeldung: 13.05.2020
(73) Patentinhaber: Henkel AG & Co. KGaA, 40589 Düsseldorf (DE)
(72) Erfinder: SCHMID, Christoph, 82216 Maisach OT. Gernlinden (DE)
(86) Internationale Anmeldenummer: PCT/EP2018/067974
(87) Internationale Veröffentlichungsnummer: WO 2019/007972

(56) Entgegenhaltungen:
- EP-A1- 0 481 208
- WO-A1-2013/036240
- US-A- 2 605 751
- US-A- 2 617 257
- US-A- 2 957 457
- US-A- 4 558 715
- US-A- 5 137 435

## Beschreibung

Die Erfindung betrifft einen Pneumatikmotor für eine Förderpumpe. Des Weiteren betrifft die Erfindung ein Verfahren zum Betreiben des Pneumatikmotors.

In vielen Bereichen werden für das Pumpen von Flüssigkeiten Förderpumpen eingesetzt, die durch einen Pneumatikmotor angetrieben werden. Der Pneumatikmotor weist dabei einen Motorzylinder und einen Motorkolben auf, der im Motorzylinder hin- und her bewegbar angeordnet ist und mit Druckluft beaufschlagt wird. Ein Förderdruck der Förderpumpe ist dabei proportional zu dem Druck der Druckluft.

Durch eine am Motorkolben angeordnete Ventileinheit im Zusammenspiel mit oberen und unteren Anschlagmittel für die Ventileinheit wird im Pneumatikmotor selbsttätig eine Hubrichtungsumkehr des Motorkolbens durchgeführt. In einer ersten Ventilstellung der Ventileinheit sorgt die Druckluft für eine Abwärtsbewegung des Motorkolbens. In einer zweiten Ventilstellung der Ventileinheit hingegen bewegt sich der Motorkolben in entgegen gesetzter Richtung, d.h. die Druckluft sorgt dann für eine Aufwärtsbewegung des Motorkolbens. Wenn die Ventileinheit bei der Aufwärtsbewegung gegen die oberen Anschlagmittel in Form eines feststehenden, oberen Endanschlags stößt, wird die Ventileinheit von der der zweiten Ventilstellung in die erste Ventilstellung geschaltet, wodurch die Aufwärtsbewegung in die Abwärtsbewegung umgekehrt wird. Beim Erreichen der unteren Anschlagmittel in Form eines feststehenden, unteren Endanschlags wird die Ventileinheit von der ersten Ventilstellung in die zweite Ventilstellung geschaltet. Entsprechend kommt es auch hier zu einer Hubrichtungsumkehr des Motorkolbens.

Um ein sicheres Schalten der Ventileinheit zu gewährleisten, ist aus dem Stand der Technik bekannt, die Ventileinheit mit einer Kipphebelmechanik zu koppeln, die eine Feder aufweist. Diese Feder wird gespannt, wenn die Ventileinheit bzw. die Kopplung von Kipphebelmechanik und Ventileinheit gegen einen der beiden Endanschläge läuft, um sich schließlich schlagartig zu entspannen. Die dabei freiwerdende Energie wird für ein zuverlässiges Schalten der Ventileinheit genutzt. Das Spannen der Feder erfordert jedoch zum einen ein gewisses Druckniveau für die auf den Motorkolben wirkende Druckluft, damit der Motorkolben nicht kurz vor seinen Endlagen zum Stillstand kommt. Zum anderen kommt es vor den Endlagen des Motorkolbens zu einem Einbruch des Förderdrucks, da ein nicht unerheblicher Teil der durch die Druckluft bereitgestellten Energie zum Spannen der Feder benötigt wird.

Bei Anwendungen, bei denen ein niedriger Förderdruck der Förderpumpe angestrebt wird, kann daher aufgrund der Proportionalität zwischen Förderdruck und dem auf den Motorkolben wirkenden Druck der Druckluft der Pneumatikmotor nicht ohne weiteres eingesetzt werden. Ein zusätzlicher Druckregler für die Flüssigkeit, der der Förderpumpe nachgeschaltet ist, kann den Förderdruck auf das gewünschte Niveau herabsetzen. Auch kann der Druckregler auf den Einbruch des Förderdrucks reagieren, der auf das Spannen der Feder zurückzuführen ist. Doch bedeutet der zusätzliche Druckregler für die Flüssigkeit erhebliche Mehrkosten und eine erhöhte Komplexität.

Der Erfindung liegt daher die Aufgabe zu Grunde, einen einfach aufgebauten Pneumatikmotor für eine Förderpumpe bereitzustellen, der einen kleinen Förderdruck für die Förderpumpe ermöglicht.

Die der Erfindung zu Grunde liegende Aufgabe wird mit der Merkmalskombination gemäß Anspruch 1 gelöst. Ausführungsbeispiele der Erfindung könnten den Unteransprüchen zu Anspruch 1 entnommen werden.

Erfindungsgemäß ist vorgesehen, den Pneumatikmotor mit einer aktiven Hubumschaltung auszustatten, die einen Umschaltzylinder und einen im Umschaltzylinder bewegbar angeordneten Umschaltkolben umfasst, der mit der Ventileinheit gekoppelt ist. Der Umschaltkolben übernimmt dabei die Funktion der Endabschläge des aus dem Stand der Technik bekannten Pneumatikmotors, jedoch mit dem Unterschied, dass der Umschaltkolben nicht feststeht, sondern aktiv bewegt wird, um die Hubrichtung des Motorkolbens umzukehren. Dadurch lässt sich die für das Schalten der Ventileinheit benötigte Zeit derart reduzieren, dass es selbst bei kleinen Förderdrücken der Förderpumpe zu keinem (länger andauernden) Stillstand des Motorkolbens bei der Hubrichtungsumkehr kommt, der sich negativ auf die Gleichmäßigkeit des Förderdrucks auswirkt. Gleichwohl durch die aktive Hubumschaltung die statischen Kräfte, die für das Schalten der Ventileinheit notwendig sind und entsprechend auf den Motorkolben wirken, nicht reduziert werden, wird die für das Schalten der Ventileinheit benötigte Zeit gegenüber der passiven Hubumschaltung mit feststehenden Endanschlägen deutlich reduziert. Es hat sich herausgestellt, dass das aktive und damit schnellere Umschalten der Ventileinheit keinen bzw. nur einen sehr kleinen Einfluss auf den Verlauf des Förderdrucks der Förderpumpe hat. Zudem findet durch die aktive Hubumschaltung eine Entkopplung statt zwischen der Zeit für das Schalten der Ventileinheit und der Kolbengeschwindigkeit des Motorkolbens. Daher lassen sich mit der aktiven Hubumschaltung die Förderdrücke deutlich reduzieren, da kein zusätzlicher Förderdruck für die Hubumschaltung benötigt wird. So können Förderdrücke von unter 10 bar t erreicht werden. Der Druck der Druckluft kann beispielsweise Werte unter 2 bar (vorzugsweise 0,5 bis 1,5 bar) annehmen. Gegenüber einem "klassischen" Pneumatikmotor mit feststehenden Endanschlägen, der mit einem Druck für die Druckluft von ca. 3 bar und mehr betrieben wird, bedeutet dies eine Reduktion des Drucks der Druckluft und somit des Förderdrucks der Förderpumpe um einen Faktor größer 2 bzw. von ca. 6.

Mit anderen Worten bilden der Umschaltkolben und seine gezielte Druckbeaufschlagung zumindest teilweise die oberen und unteren Anschlagmittel, durch die das Umschalten der Ventileinheit herbeigeführt werden.

Eine Bewegungsachse des Umschaltkolbens kann mit einer Bewegungsachse des Motorkolbens zusammenfallen. Dadurch ist eine einfache Kopplung zwischen der zu schaltenden Ventileinheit und dem Umschaltkolben möglich, wenn die Ventileinheit an dem Motorkolben angeordnet ist und sich mit diesem innerhalb des Motorzylinders bewegt. Die erste Ventilstellung und die zweite Ventilstellung der Ventileinheit beziehen sich dann auf Positionen der Ventileinheit relativ zum Motorkolben. Vorzugsweise erstreckt sich ein Schaltweg der Ventileinheit (Weg zwischen den Ventilstellungen) parallel zu den Bewegungsachsen von Umschaltkolben und Motorkolben.

In einem Ausführungsbeispiel umfasst die aktive Hubumschaltung ein Schaltventil, das in einer ersten Schaltstellung für eine Abwärtsbewegung des Umschaltkolbens und in einer zweiten Schaltstellung für eine Aufwärtsbewegung des Umschaltkolbens sorgt. Dabei kann in der ersten Schaltstellung ein erster oder oberer Zylinderraum des Motorzylinders unter Druck gestellt werden, während gleichzeitig ein zweiter oder unterer Zylinderraum des Motorylinders mit Druck beaufschlagt bleibt. Die Druckbeaufschlagung erfolgt durch den Motorkolben hindurch vom unteren Zylinderraum. Bei der zweiten Schaltstellung des Schaltventils bleibt der zweite Zylinderraum des Motorzylinders unter Druck gesetzt und der erste Zylinderraum des Motorzylinders wird drucklos gestellt. Die Abwärtsbewegung des Umschaltkolbens soll dabei, unabhängig von der Ausrichtung und Lage des Motorkolbens, die Bewegung des Umschaltkolbens sein, bei der der erste Zylinderraum des Umschaltzylinders größer und der zweite Zylinderraum kleiner werden.

Das Schaltventil kann in einer dritten Schaltstellung den Umschaltkolben drucklos stellen. Dies bedeutet im entsprechenden Ausführungsbeispiel, dass sowohl der erste Zylinderraum als auch der zweite Zylinderraum des Umschaltzylinders drucklos gestellt werden. Vorzugsweise handelt es sich bei der dritten Schaltstellung um eine federbelastete Ruhestellung des Schaltventils, also um eine Stellung, die das Schaltventil selbsttätig einnimmt.

Bei einer Ausführung der Erfindung ist der Umschaltkolben mit einer einen Energiespeicher aufweisenden Kipphebelmechanik verbunden, die auf die Ventileinheit wirkt. Der Energiespeicher kann als die oben beschriebene Feder ausgebildet sein, die durch das Spannen Energie aufnimmt, speichert und in der Lage ist, diese vergleichsweise schnell wieder abzugeben. Die Verbindung des Umschaltkolbens mit der Kipphebelmechanik oder zumindest mit einem Teil der Kipphebelmechanik kann starr ausgebildet sein, beispielsweise durch eine Umschaltkolbenstange, die sich zwischen Umschaltkolben und Kipphebelmechanik erstreckt.

Die oberen Anschlagmittel können einen feststehenden oberen Endanschlag am Umschaltzylinder umfassen. Dieser obere Endanschlag kann beispielsweise als obere Stirnwand des Umschaltzylinders ausgeführt sein, die den ersten oder oberen Zylinderraum begrenzt. Entsprechend können auch die unteren Anschlagmittel einen feststehenden unteren Endanschlag umfassen. Selbst wenn der erste Zylinderraum nicht unter Druck gestellt ist, was im Normalbetrieb des erfindungsgemäßen Pneumatikmotors zu der Hubrichtungsumkehr von der Aufwärtsbewegung in die Abwärtsbewegung des Umschaltkolbens führt, kann somit in einem Notbetrieb (beispielsweise bei einem Ausfall der Ansteuerung des Steuerventils) der Pneumatikmotor grundsätzlich weiter betrieben werden. Der Umschaltkolben läuft dabei gegen die obere Stirnwand des Umschaltzylinders, wodurch die Ventileinheit analog zum klassischen Pneumatikmotor geschaltet wird. Beim Notbetrieb sind aber hinsichtlich Förderdruck und Förderrate wieder die Bedingungen zu beachten, wie sie bei einem klassischen Pneumatikmotor ohne aktive Hubumschaltung gegeben sind. Dieses Ausführungsbeispiel erfordert jedoch nur geringe Änderungen an dem klassischen Pneumatikmotor mit dem Vorteil, dass bei der Betriebsweise des erfindungsgemäßen Pneumatikmotors ohne weiteres auf die klassische Betriebsweise mit den feststehenden Endanschlägen zurückgegriffen werden kann.

Die aktive Hubumschaltung kann eine Steuerung und einen ersten, an dem Umschaltzylinder angeordneten Näherungsschalter umfassen, wobei die Steuerung ausgelegt ist, das Schaltventil in die erste Schaltstellung zu schalten, wenn der Umschaltkolben in der Aufwärtsbewegung den ersten Näherungsschalter erreicht. Der erste Näherungsschalter kann über eine Signalleitung mit der Steuerung verbunden sein. In der ersten Schaltstellung wird der obere Zylinderraum unter Druck gestellt, so dass der Umschaltkolben im Umschaltzylinder eine Abwärtsbewegung vollführt, die der noch stattfindenden Aufwärtsbewegung der Motorkolben entgegenwirkt. Die Ventileinheit wird durch die Abwärtsbewegung des Umschaltkolbens in die erste Ventilstellung geschaltet, wodurch die Aufwärtsbewegung des Motorkolbens gestoppt und die Abwärtsbewegung des Motorkolbens eingeleitet wird.

Die Hubumschaltung kann einen zweiten Näherungsschalter umfasst, wobei die Steuerung ausgelegt ist, das Schaltventil in die zweite Schaltstellung zu schalten, wenn der Umschaltkolben in der Abwärtsbewegung den zweiten Näherungsschalter erreicht. Zwischen dem zweiten Näherungsschalter und der Steuerung ist vorzugsweise eine weitere Signalleitung vorgesehen. Bedingt durch die zweite Schaltstellung des Schaltventils bleibt der zweite oder untere Zylinderraum mit Druck beaufschlagt und der erste oder obere Zylinderraum wird drucklos geschalten, so dass auch hier die Ventileinheit durch eine Bewegung des Umschaltkolbens aktiv geschaltet wird.

Die Steuerung kann ausgelegt sein, das Schaltventil temporär in der ersten Schaltstellung bzw. in der zweiten Schaltstellung zu halten. Wenn einer der Näherungsschalter erreicht wird, kann das Schaltventil den ersten bzw. zweiten Zylinderraum des Umschaltzylinders für einen Zeitraum t von beispielsweise 0,5 bis 1 sec mit Druck beaufschlagen. Diese Zeitdauer reicht aus, die Ventileinheit zu schalten bzw. die Feder der Kipphebelmechanik so weit zu spannen, dass diese sich schließlich schlagartig entspannt und dabei die Ventileinheit schaltet. Zwischen den Näherungsschaltern kann der Umschaltkolben drucklos gestellt werden, so dass er sich synchron mit dem Motorkolben bewegt. Nur beim Schalten der Ventileinheit kommt es dann zu einer Relativbewegung zwischen Umschaltkolben und Motorkolben.

Eine weitere Aufgabe der Erfindung, die Bereitstellung eines Verfahrens zum Betreiben des oben beschriebenen erfindungsgemäßen Pneumatikmotors wird durch Anspruch 10 gelöst. Gemäß Anspruch 10 ist die durch den Umschaltkolben erzeugte Kraft größer als die benötigte Kraft zum Schalten der Ventileinheit. Dadurch findet eine Entkopplung statt zwischen der Geschwindigkeit des Motorkolbens und der Geschwindigkeit des Umschaltkolbens beim Umschalten der Ventileinheit, wodurch schnellere Umschaltungen der Ventileinheit realisiert werden können.

Wenn der Umschaltkolben mit dem Umschaltdruck beaufschlagt wird, kann sich der Zeitraum t in eine erste Phase, in der der Umschaltdruck mittelbar über den Umschaltkolben und der Motordruck in entgegen gesetzter Richtung auf den Motorkolben wirken, und in eine zweite Phase aufteilen, in der der Umschaltdruck über den Umschaltkolben und der Motordruck in gleicher Richtung auf den Motorkolben wirken. Die erste Phase kann dabei 60 bis 80 % des Zeitraums betragen, während die zweite Phase dann entsprechend 40 bis 20 % des gesamten Zeitraums andauert. In der zweiten Phase lässt sich dem Motorkolben über den Umschaltkolben eine zusätzliche Energie zuführen, die der Energie entspricht, die beim Spannen und Entspannen der Feder der Kipphebelmechanik verloren gegangen ist (Ausgleich der Hystereseverluste der Feder).

Anhand eines in der Zeichnung dargestellten Ausführungsbeispiels wird die Erfindung näher erläutert. Es zeigen:
- Figur 1: im Schnitt einen erfindungsgemäßen Pneumatikmotor mit einem Motorkolben und einer Ventileinheit;
- Figur 2: im Schnitt den Pneumatikmotor mit der Ventileinheit in einer geänderten Ventilstellung und den Motorkolben in einer anderen Kolbenposition;
- Figur 3: im Schnitt den Pneumatikmotor mit dem Motorkolben in einem oberen Totpunkt;
- Figur 4: im Schnitt den Pneumatikmotor nach Durchlaufen des oberen Totpunkts;
- Figur 5: den Pneumatikmotor in einer perspektivischen Ansicht;
- Figur 6: den Pneumatikmotor gemäß Figur 5 mit der Ventileinheit in geänderter Ventilstellung;
- Figur 7: den Pneumatikmotor gemäß Figur 6 im Schnitt; und
- Figur 8: einen pneumatischen Schaltplan für den erfindungsgemäßen Pneumatikmotor.

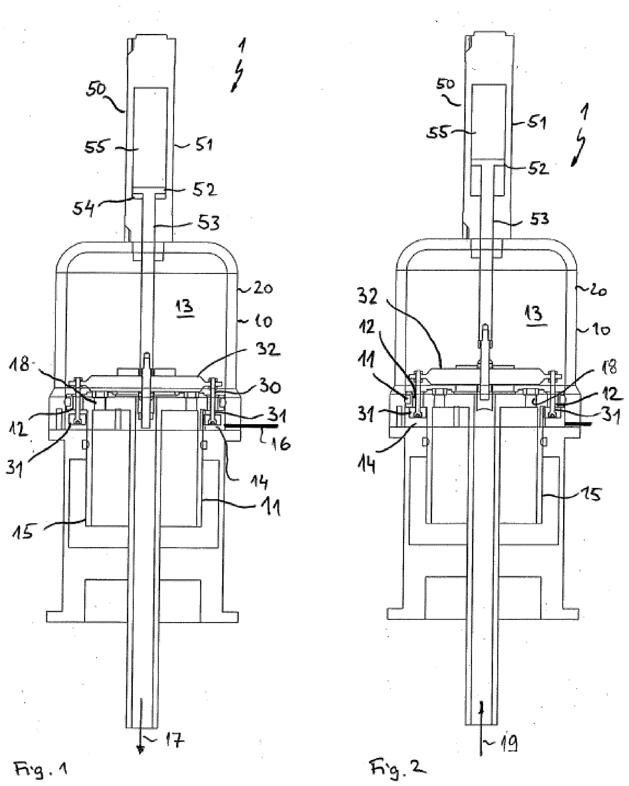

Die Figuren 1 bis 4 zeigen einen Pneumatikmotor, der in seiner Gesamtheit mit 1 bezeichnet ist. Der Pneumatikmotor 1 weist einen Motorzylinder 10 auf, in dem ein Motorkolben 11 hin und her bewegbar angeordnet ist. An dem Motorkolben 11 ist eine Ventileinheit 30 bewegbar befestigt. In den Darstellungen der Figuren 1 bis 4 ist am oberen Ende des Motorzylinders 10 ein Umschaltzylinder 51 angeordnet, in dem sich ein Umschaltkolben 52 befindet. Der Umschaltkolben 52 ist über eine Umschaltkolbenstange 53 mit der Ventileinheit 30 gekoppelt. Der Umschaltzylinder 51 sowie der Umschaltkolben 52 sind Teile einer aktiven Hubumschaltung, auf die später noch näher eingegangen wird. Die Hubumschaltung ist mit 50 bezeichnet.

Durch den Pneumatikmotor 1 lässt sich beispielsweise eine Förderpumpe antreiben, die eine viskose Flüssigkeit wie einen flüssigen Klebstoff mit einer vergleichsweise kleinen Förderrate (< 500 ml/min) pumpt. Der Förderdruck der Förderpumpe liegt vorzugsweise unter 30 bar. Auf die Förderpumpe wird im Folgenden nicht näher eingegangen.

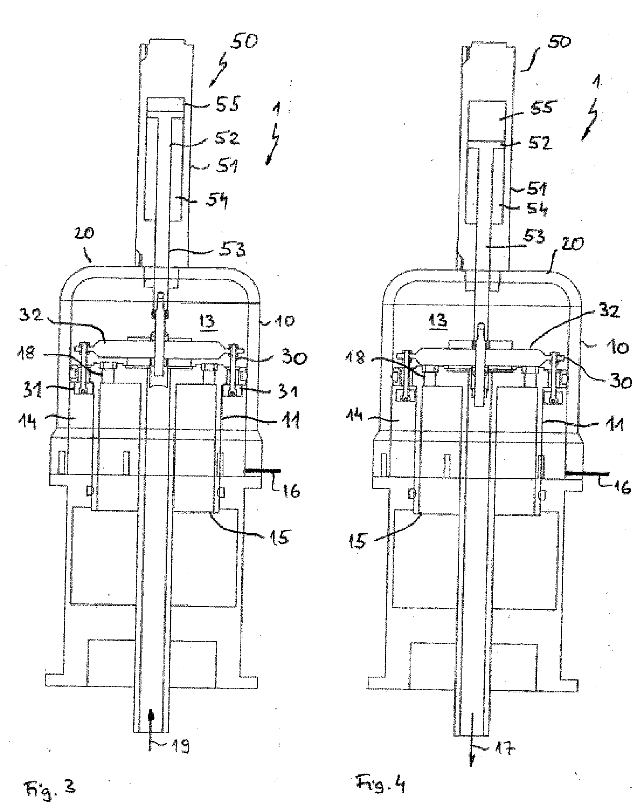

Die Figuren 1 bis 4 zeigen den Motorkolben 10, die Ventileinheit 30 und den Umschaltkolben 52 in verschiedenen Stellungen. In Figur 1 befindet sich die Ventileinheit 30 in einer ersten Ventilstellung. Die Ventileinheit 30 umfasst zwei Ventile 31, die durch einen Ventilbalken 32 miteinander verbunden sind. In Figur 2 befindet sich die Ventileinheit 30 in einer zweiten Ventilstellung. In dieser Stellung verschließen die Ventile 31 Durchgangsöffnungen 12 im Motorkolben 11, wobei sich die Durchgangsöffnungen 12 von einem oberen Motorzylinderraum 13 bis zu einem unteren Motorzylinderraum 14 erstrecken. D.h., in der zweiten Ventilstellung trennt die Ventileinheit 30 den oberen Motorzylinderraum 13 von dem unteren Motorzylinderraum 14. Bedingt durch einen Motorkolbenschaft 15 ist der untere Motorzylinderraum 14 im Querschnitt ringförmig, während der obere Motorzylinderraum 13 im Querschnitt kreisförmig ist. Da die Querschnittsfläche des Motorkolbens 11 auf der Seite des oberen Motorzylinderraums 13 größer ist als die Querschnittsfläche des Motorkolbens 11 auf der Seite des unteren Motorzylinderraums 14, bewirkt ein Druck einer Druckluft, die durch eine mit 16 bezeichnete Druckluftleitung in den unteren Motorzylinderraum 14 eingeleitet wird, grundsätzlich eine Abwärtsbewegung 17 (siehe Figur 4), wenn sich die Ventileinheit 30 in der ersten Ventilstellung befindet. In der zweiten Ventilstellung ist der obere Motorzylinderraum 13 von der Druckluft aus der Druckluftleitung 16 entkoppelt, wobei eine Entlüftung des oberen Motorzylinderraums 13 durch Entlüftungsöffnungen 18 im Motorkolben 11 ermöglicht wird. Wie beispielsweise Figur 2 entnommen werden kann, gibt der Ventilbalken 32 in der zweiten Ventilstellung diese Entlüftungsöffnungen 18 frei. In der zweiten Ventilstellung der Ventileinheit 30 wird somit nur der untere Motorzylinderraum 15 unter Druck gesetzt, während der obere Motorzylinderraum 13 entlüftet wird. Folglich wird in der zweiten Ventilstellung der Motorkolben 11 eine Aufwärtsbewegung 19 vollführen. Beträgt die (wirksame) Querschnittfläche des Motorkolbens auf der Seite des oberen Motorzylinderraums das Doppelte von der Querschnittsfläche des Motorkolbens 11 auf der Seite des unteren Motorzylinderraums 14, so ist die resultierende Kraft auf den Motorkolben 11 bei der Abwärtsbewegung 17 und der Aufwärtsbewegung 19 gleich groß.

Figur 1 zeigt den Motorkolben 11 in unmittelbarer Nähe zu einem unteren Totpunkt. Wenn nun ein unterer Zylinderraum 54 des Umschaltzylinders 51 mit Druck beaufschlagt wird, bewegt sich der Umschaltkolben 52 mit der Umschaltkolbenstange 53 nach oben und zieht die Ventileinheit 30 von der in Figur 1 gezeigten ersten Ventilstellung in die in der Figur 2 gezeigten zweiten Ventilstellung. Dadurch wird der obere Motorzylinderraum 13 drucklos gestellt und entlüftet, sodass die Abwärtsbewegung 17 in eine Aufwärtsbewegung 19 umgekehrt wird. Figur 2 zeigt somit die Zustände im Pneumatikmotor 1 mit einem gewissen zeitlichen Versatz nach den Zuständen der Figur 1.

Ausgehend von Figur 2 mit der dort stattfindenden Aufwärtsbewegung 19 des Motorkolbens 11 erreicht der Motorkolben 11 nach einer gewissen Zeit seinen oberen Totpunkt bzw. die Nähe dazu (siehe Figur 3). Durch eine Druckbeaufschlagung eines oberen Zylinderraums 55 des Umschaltzylinders 51 lässt sich die Ventileinheit 30 von der in Figur 3 dargestellten zweiten Ventilstellung wieder zurück in die erste Ventilstellung drücken. Entsprechend bewegt sich der Kolben wieder nach unten (siehe Abwärtsbewegung 17 in Figur 4).

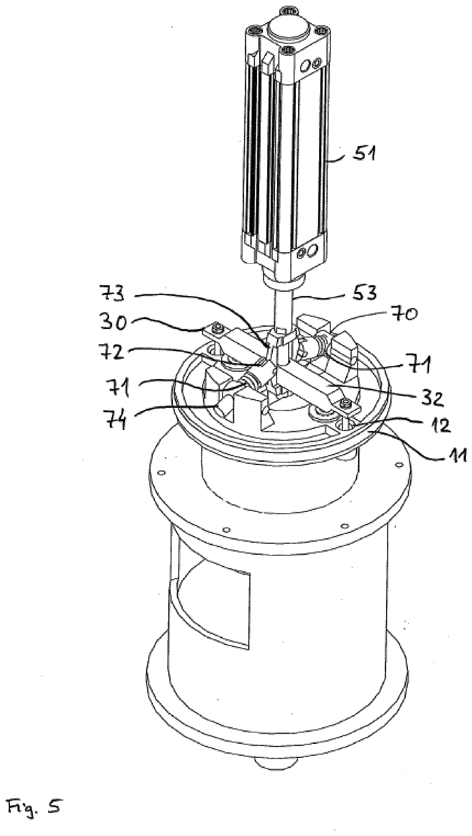

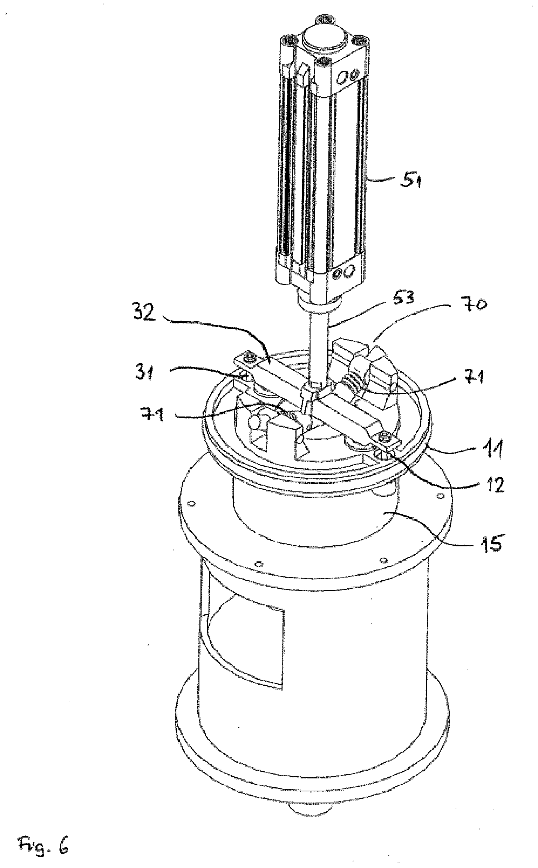

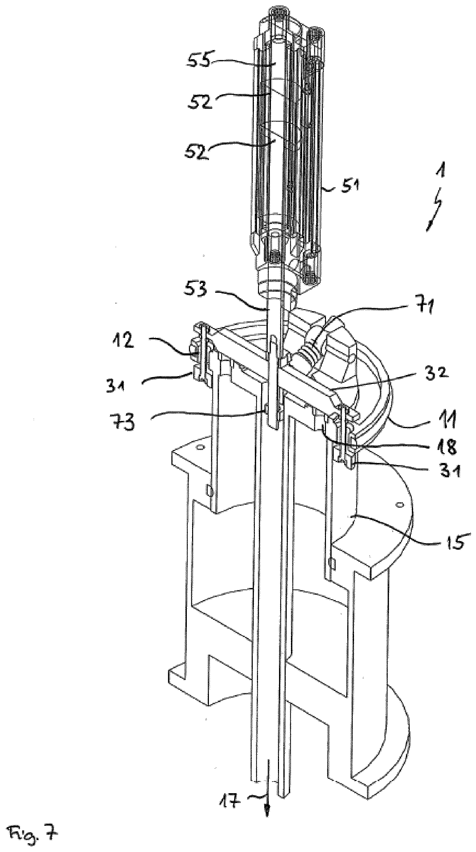

Figur 5 zeigt den Pneumatikmotor 1 in einer perspektivischen Ansicht. Der besseren Übersicht halber ist in Figur 5 ein Zylinderkopf, der in den Figuren 1 bis 4 mit 20 bezeichnet wird, nicht dargestellt. Insbesondere ist der Figur 5 der Aufbau einer Kipphebelmechanik 70 zu entnehmen, die mit der Umschaltkolbenstange 53 verbunden ist und auf die Ventileinheit 30 wirkt. Die in Figur 5 dargestellte Ventilstellung der Ventileinheit 30 entspricht der zweiten Ventilstellung (Figuren 2 und 3). In Figur 6, die den Pneumatikmotor 1 in gleicher Ansicht wie Figur 5 zeigt, befindet sich die Ventileinheit 30 in der ersten Ventilstellung (vergleiche Figur 1 und 4). Figur 7 stellt einen Längsschnitt durch den Pneumatikmotor 1 der Figur 6 dar.

Wie den Figuren 5 bis 7 entnommen werden kann, umfasst die Kipphebelmechanik 70 zwei Federn 71 in Form von Schraubenfedern, die mit einem inneren Ende 72 über eine Klammer 73 fest mit der Umschaltkolbenstange 53 verbunden sind. Ein äußeres Ende 74 der Schraubenfeder 71 ist wie das innere Ende 72 verschwenkbar gelagert. Wirkt nun ausgehend von der in Figur 5 dargestellten zweiten Ventilstellung eine nach unten gerichtete Kraft von dem Umschaltzylinder 51 über die Umschaltkolbenstange 53 auf die beiden Klammern 53, so werden die Schraubenfedern 71 zusammengedrückt und leicht nach unten geschwenkt. Dabei werden die Schraubenfedern 71 bis zu einem Punkt zusammengedrückt, in dem die Längsachsen der Schraubenfedern 71 in einer Ebene senkrecht zur Umschaltkolbenstange 53 liegen. Bei weiterer Bewegung der Umschaltkolbenstange 53 nach unten wirkt die Federkraft der gespannten Schraubenfedern 71 nicht mehr gegen die Kraft der Umschaltkolbenstange 53, sondern grundsätzlich in gleiche Richtung, sodass die gespannten Schraubenfedern 71 sich schlagartig entspannen und die Klammern 73 entsprechend schnell nach unten in eine Position drücken, wie sie in den Figuren 6 und 7 dargestellt ist. Dabei drückt die Klammer 73 von oben gegen den Ventilbalken 32 und schlägt somit die Ventileinheit 30 in die erste Ventilstellung (siehe Figuren 6 und 7).

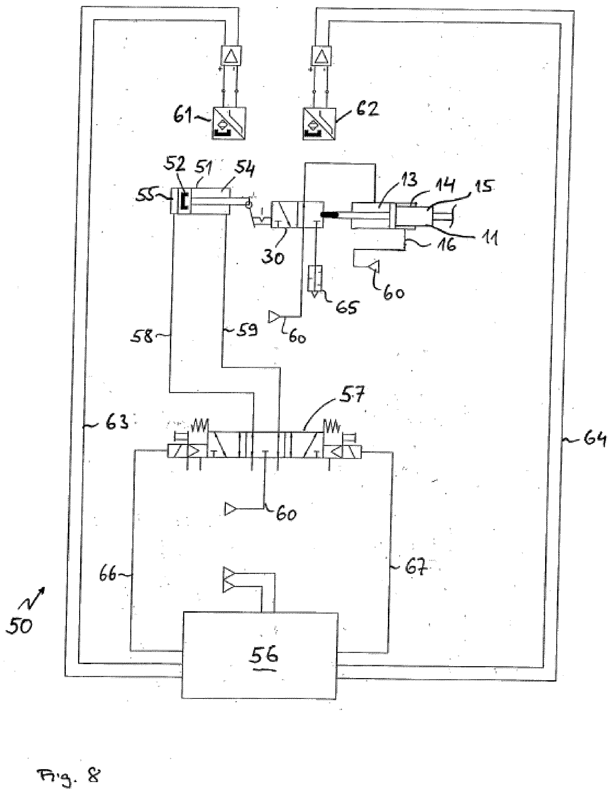

Figur 8 zeigt ein pneumatisches Schaltbild für den erfindungsgemäßen Pneumatikmotor. 1 bzw. für die aktive Umschaltung 50. Die aktive Hubumschaltung 50 umfasst eine Steuerung 56 und ein Schaltventil 57, das als 5/3-Wege-Ventil ausgebildet ist. Zu erkennen ist, dass das Schaltventil 57 über eine Druckluftleitung 58 mit dem oberen Zylinderraum 55 des Umschaltzylinders 51 verbunden ist. Eine weitere Druckluftleitung 59 verbindet das Schaltventil 57 mit dem unteren Zylinderraum 54 des Umschaltkolbens 51.

In der in Figur 8 dargestellten Schaltstellung des Schaltventils 57 sind der oberen Zylinderraum 55 und der untere Zylinderraum 54 des Umschaltzylinders 51 drucklos gestellt. Die in Figur 8 dargestellte Schaltstellung des Schaltventils 57 soll einer dritten Schaltstellung des Schaltventils entsprechen.

In einer ersten Schaltstellung des Schaltventils 57, bei der es in der Darstellung der Figur 8 nach rechts geschaltet wäre, verbindet das Schaltventil 57 eine Druckluftquelle 60 über die Druckluftleitung 58 mit dem oberen Zylinderraum 55. Der Umschaltkolben 52 wird dabei in der Darstellung der Figur 8 nach rechts bzw. abwärts bewegt, sodass die hier schematisch als 2/2-Wege-Ventil dargestellte Ventileinheit 30 in die erste Ventilstellung gedrückt wird, in der auch der obere Motorkolbenraum 13 mit der Druckluftquelle 60 verbunden ist (entspricht geöffneten Durchgangöffnungen 12 bei gleichzeitig geschlossenen Entlüftungsöffnungen 18). Bedingt durch die größere Querschnittsfläche des Motorkolbens 15 zur Seite des oberen Motorkolbenraums 13 bewegt sich der Motorkolben 11 in der Darstellung der Figur 8 nach rechts, es findet also eine Abwärtsbewegung des Motorkolbens 15 statt.

In einer zweiten Ventilstellung, bei der das Schaltventil 57 in der Figur 8 gedanklich nach links geschaltet wäre, ist die Druckluftquelle 60 über die Druckluftleitung 59 mit dem unteren Zylinderraum 54 des Umschaltzylinders 51 verbunden. In diesem Fall befindet sich die Ventileinheit 30 in der in Figur 8 nicht dargestellten, zweiten Ventilstellung, bei der obere Motorkolbenraum 13 über einen Schalldämpfer 65 entlüftet ist.

Die aktive Hubumschaltung 50 umfasst des Weiteren einen ersten Näherungsschalter 61 und einen zweiten Näherungsschalter 62, die über Signalleitungen 63 bzw. 64 mit der Steuerung 56 verbunden sind. Die Näherungsschalter 61, 62 sind an dem Umschaltzylinder 51 befestigt. Der erste Näherungsschalter 61 kann auch als oberer Näherungsschalter bezeichnet werden, da er über dem zweiten oder unteren Näherungsschalter 62 am Umschaltzylinder 51 angeordnet ist.

Wenn sich nun der Motorkolben 11 in der Aufwärtsbewegung 19 befindet, so nähert sich über die Umschaltkolbenstange 53 der Umschaltkolben 52 dem ersten Näherungsschalter. Die Ventileinheit 30 befindet sich dabei in der zweiten Ventilstellung, in der der obere Motorkolbenraum 13 entlüftet wird. Erreicht nun der Umschaltkolben 52 den ersten Näherungsschalter 61, gibt dieser über die Signalleitung 63 ein Signal an die Steuerung 56 ab, die daraufhin über eine Ansteuerleitung 66 das Schaltventil 57 aus der in Figur 8 dargestellten dritten Schaltstellung in die erste Schaltstellung schaltet, wodurch der obere Zylinderraum 55 unter Druck gesetzt wird. Der Umschaltkolben 52 bewegt sich dabei in entgegengesetzter Richtung zu dem noch sich in der Aufwärtsbewegung 19 befindlichen Motorkolben 151 und drückt schließlich über die Kipphebelmechanik 70 die Ventileinheit 30 aus der zweiten Ventilstellung (siehe Figur 3 oder die Schaltstellung der Ventileinheit 30 in Figur 8) in die erste Ventilstellung, in der auch der obere Motorkolbenraum 13 unter Druck gesetzt wird. Dies führt ausgehend von der Aufwärtsbewegung 19 zu der Abwärtsbewegung 17 des Motorkolbens 11 und somit zu einer Hubrichtungsumkehr. Die Druckbeaufschlagung des oberen Zylinderraums 55 erfolgte dabei nur einen begrenzten Zeitraum (beispielsweise für 0, 5 bis 1 Sekunde). Danach wird das Schaltventil 57 in die dritte Schaltstellung geschaltet, in der der Umschaltkolben 52 drucklos gestellt wird. Bei Erreichen des zweiten oder unteren Näherungsschalters 62 wird über die Signalleitung 64 die Steuerung 56 aktiv und schaltet über eine Ansteuerungsleitung 67 das Schaltventil 57 in die zweite Schaltstellung (in Figur 8 nach links). Daraus resultiert eine Aufwärtsbewegung des Umschaltkolbens, durch die über die Kipphebelmechanik 70 die Ventileinheit 30 von der ersten Ventilstellung in die zweite Ventilstellung geschaltet wird. Auch hier wird das Schaltventil 57 nach kurzer Zeit wieder in die dritte Schaltstellung (Ruhestellung) zurückgeschaltet, bei der sich der Umschaltkolben 52 und der Motorkolben 11 synchron in gleicher Richtung bewegen.

Bei Ausfall der Steuerung 56 verharrt das Steuerventil 57 in der in Figur 8 gezeigten Stellung. Bei Erreichen der Näherungsschalter 61, 62 findet entsprechend keine Druckbeaufschlagung der Zylinderräume 54, 55 statt. Stattdessen läuft der Umschaltkolben 52 bis in die durch die Ausmaße des Umschaltzylinders bedingten Totpunktlagen. Bei Erreichen einer solchen mechanischen Totpunktlage kommt es zu einer Relativbewegung zwischen dem dann aufgelaufenen Umschaltkolben und dem sich weiterhin bewegenden Motorkolben. Dabei wird die Kipphebelmechanik gespannt, die dann die Schaltung der Ventileinheit 30 einleitet, was letztlich zu der Hubrichtungsumkehr führt. Bei Ausfall der Steuerung 56 kommt es daher beim Umschalten der Ventileinheit nicht zu einer aktiven Gegenbewegung des Umschaltkolbens wie im normalen Betrieb des erfindungsgemäßen Pneumatikmotors 1, sondern lediglich zu einer Relativbewegung zwischen Umschaltkolben und Motorkolben, allein bedingt durch die Bewegung des Motorkolbens.

### Bezugszeichenliste

- 1: Pneumatikmotor

- 10: Motorzylinder
- 11: Motorkolben
- 12: Durchgangsöffnung
- 13: oberer Motorzylinderraum
- 14: unterer Motorzylinderraum
- 15: Motorkolbenschaft
- 16: Druckluftleitung
- 17: Abwärtsbewegung
- 18: Entlüftungsöffnung
- 19: Aufwärtsbewegung
- 20: Zylinderkopf

- 30: Ventileinheit
- 31: Ventil
- 32: Ventilbalken

- 50: Hubumschaltung
- 51: Umschaltzylinder
- 52: Umschaltkolben
- 53: Umschaltkolbenstange
- 54: unterer Zylinderraum
- 55: oberer Zylinderraum
- 56: Steuerung
- 57: Schaltventil
- 58: Druckluftleitung
- 59: Druckluftleitung
- 60: Druckluftquelle
- 61: erster Näherungsschalter
- 62: zweiter Näherungsschalter
- 63: Signalleitung
- 64: Signalleitung
- 65: Schalldämpfer
- 66: Ansteuerleitung
- 67: Ansteuerleitung

- 70: Kipphebelmechanik
- 71: Feder/Schraubenfeder
- 72: inneres Ende
- 73: Klammer
- 74: äußeres Ende

## Patentansprüche

1. Pneumatikmotor (1) für eine Förderpumpe, umfassend
- einen Motorzylinder (10) und einen Motorkolben (11), der im Motorzylinder (10) bewegbar angeordnet ist und mit Druckluft beaufschlagbar ist,
- eine innerhalb des Motorzylinders (10) angeordneten und bewegbar an dem Motorkolben (11) befestigten Ventileinheit (30), wobei die Druckluft in einer ersten Ventilstellung der Ventileinheit (30) für eine Abwärtsbewegung (17) des Motorkolbens (11) und in einer zweiten Ventilstellung für eine Aufwärtsbewegung (19) des Motorkolbens (11) im Motorzylinder (10) sorgt,
- obere Anschlagmittel für die Ventileinheit (30), durch die die Ventileinheit (30) von der zweiten Ventilstellung in die erste Ventilstellung geschaltet wird und somit die Aufwärtsbewegung (19) in die Abwärtsbewegung (17) umgekehrt wird, und
- untere Anschlagmittel für die Ventileinheit (30), durch die die Ventileinheit (30) von der ersten Ventilstellung in die zweite Ventilstellung geschaltet wird und somit die Abwärtsbewegung (17) in die Aufwärtsbewegung (19) umgekehrt wird,
**dadurch gekennzeichnet, dass** eine aktive Hubumschaltung (50) vorgesehen ist, die einen Umschaltzylinder (51) am oberen Ende des Motorzylinders (10) und einen im Umschaltzylinder (51) bewegbar angeordneten Umschaltkolben (52) umfasst, der mit der Ventileinheit (30) innerhalb des Motorzylinders (10) gekoppelt ist, um mittels einer aktiven Bewegung des Umschaltkolbens (52) eine Umschaltung der Ventileinheit (30) für eine Hubrichtungsumkehr des Motorkolbens (11) zu ermöglichen.

2. Pneumatikmotor (1) nach Anspruch 1, **dadurch gekennzeichnet, dass** eine Bewegungsachse des Umschaltkolbens (52) mit einer Bewegungsachse des Motorkolbens (11) zusammenfällt.

3. Pneumatikmotor (1) nach Anspruch 1 oder 2, **dadurch gekennzeichnet, dass** die aktive Hubumschaltung (50) ein Schaltventil (57) umfasst, das in einer ersten Schaltstellung für eine Abwärtsbewegung des Umschaltkolbens (52) und in einer zweiten Schaltstellung für eine Aufwärtsbewegung des Umschaltkolbens (52) sorgt.

4. Pneumatikmotor (1) nach Anspruch 3, **dadurch gekennzeichnet, dass** das Schaltventil (57) in einer dritten Schaltstellung den Umschaltkolben (52) drucklos stellt.

5. Pneumatikmotor (1) nach einem der Ansprüche 1 bis 4, **dadurch gekennzeichnet, dass** eine einen Energiespeicher aufweisende Kipphebelmechanik (70) vorgesehen ist, die mit dem Umschaltkolben (52) verbunden ist und die auf die Ventileinheit (30) wirkt.

6. Pneumatikmotor (1) nach einem der Ansprüche 1 bis 5, **dadurch gekennzeichnet, dass** die oberen Anschlagmittel einen feststehenden oberen Endanschlag am Umschaltzylinder (51) und die unteren Anschlagmittel einen feststehenden unteren Endanschlag am Umschaltzylinder (51) umfassen.

7. Pneumatikmotor (1) nach einem der Ansprüche 1 bis 6, **dadurch gekennzeichnet, dass** die aktive Hubumschaltung (50) eine Steuerung (56) und einen ersten, an dem Umschaltzylinder angeordneten Näherungsschalter (61) umfasst, wobei die Steuerung (56) ausgelegt ist, das Schaltventil (57) in die erste Schaltstellung zu schalten, wenn der Umschaltkolben (52) in der Aufwärtsbewegung den ersten Näherungsschalter (61) erreicht.

8. Pneumatikmotor (1) nach Anspruch 7, **dadurch gekennzeichnet, dass** die Hubumschaltung (50) einen zweiten Näherungsschalter (62) umfasst, wobei die Steuerung (56) ausgelegt ist, das Schaltventil (57) in die zweite Schaltstellung zu schalten, wenn der Umschaltkolben (52) in der Abwärtsbewegung den zweiten Näherungsschalter (52) erreicht.

9. Pneumatikmotor (1) nach Anspruch 8, **dadurch gekennzeichnet, dass** die Steuerung (56) ausgelegt ist, das Schaltventil (57) temporär in der ersten Schaltstellung bzw. in der zweiten Schaltstellung zu halten.

10. Verfahren zum Betreiben eines Pneumatikmotors (1) nach einem der Ansprüche 1 bis 9, **dadurch gekennzeichnet, dass** die durch den Umschaltkolben (52) wirkende Kraft größer ist als die benötigte Kraft zum Schalten der Ventileinheit (30).

## Claims

1. A pneumatic motor (1) for a feed pump, comprising
- a motor cylinder (10) and a motor piston (11), which is movably arranged in the motor cylinder (10) and to which compressed air is applied,
- a valve unit (30) arranged within the motor cylinder (10) and fastened movably to the motor piston (11), the compressed air providing for a downward movement (17) of the motor piston (11) when the valve unit (30) is in a first valve position and providing for an upward movement (19) of the motor piston (11) in the motor cylinder (10) in a second valve position,
- upper stop means for the valve unit (30), by means of which the valve unit (30) is switched from the second valve position to the first valve position, and therefore the upward movement (19) is changed to the downward movement (17), and
- lower stop means for the valve unit (30), by means of which the valve unit (30) is switched from the first valve position to the second valve position, and therefore the downward movement (17) is changed to the upward movement (19),
**characterized in that** an active stroke-switching system (50) is provided that comprises a switching cylinder (51) at the upper end of the motor cylinder (10) and a switching piston (52) which is movably arranged in the switching cylinder (51) and is coupled to the valve unit (30) within the motor cylinder (10) in order to allow switching of the valve unit (30) for a reversal of the stroke direction of the motor piston (11) by means of an active movement of the switching piston (52).

2. The pneumatic motor (1) according to claim 1, **characterized in that** a movement axis of the switching piston (52) coincides with a movement axis of the motor piston (11).

3. The pneumatic motor (1) according to claim 1 or 2, **characterized in that** the active stroke-switching system (50) comprises a switching valve (57) which provides for a downward movement of the switching piston (52) in a first switching position and for an upward movement of the switching piston (52) in a second switching position.

4. The pneumatic motor (1) according to claim 3, **characterized in that** the switching valve (57) depressurizes the switching piston (52) in a third switching position.

5. The pneumatic motor (1) according to one of claims 1 to 4, **characterized in that** a rocking lever mechanism (70) is provided that comprises an energy storage means, is connected to the switching piston (52) and acts on the valve unit (30).

6. The pneumatic motor (1) according to one of claims 1 to 5, **characterized in that** the upper stop means comprise a fixed upper end stop on the switching cylinder (51) and the lower stop means comprise a fixed lower end stop on the switching cylinder (51).

7. The pneumatic motor (1) according to one of claims 1 to 6, **characterized in that** the active stroke-switching system (50) comprises a controller (56) and a first proximity switch (61) arranged on the switching cylinder, the controller (56) being designed to switch the switching valve (57) to the first switching position when the switching piston (52) reaches the first proximity switch (61) in the upward movement.

8. The pneumatic motor (1) according to claim 7, **characterized in that** the stroke-switching system (50) comprises a second proximity switch (62), the controller (56) being designed to switch the switching valve (57) to the second switching position when the switching piston (52) reaches the second proximity switch (52) in the downward movement.

9. The pneumatic motor (1) according to claim 8, **characterized in that** the controller (56) is designed to temporarily hold the switching valve (57) in the first switching position or in the second switching position.

10. A method for operating a pneumatic motor (1) according to one of claims 1 to 9, **characterized in that** the force applied by means of the switching piston (52) is greater than the force required for switching the valve unit (30).

## Revendications

1. Moteur pneumatique (1) destiné à une pompe d'alimentation, comprenant
- un cylindre de moteur (10) et un piston de moteur (11) qui est disposé mobile dans le cylindre de moteur (10) et qui peut être exposé à de l'air comprimé,
- une unité de soupape (30) disposée à l'intérieur du cylindre de moteur (10) et fixée de manière mobile au piston de moteur (11), l'air comprimé assurant un mouvement descendant (17) du moteur le piston (11) dans une première position de soupape de l'unité de soupape (30) et un mouvement montant (19) du piston de moteur (11) dans le cylindre de moteur (10) dans une seconde position de soupape,
- des moyens de butée supérieurs destinés à l'unité de soupape (30), par lesquels l'unité de soupape (30) est commutée de la seconde position de soupape à la première position de soupape et le mouvement montant (19) est ainsi inversé au mouvement descendant (17), et
- des moyens de butée inférieurs destinés à l'unité de soupape (30), par lesquels l'unité de soupape (30) est commutée de la première position de soupape à la seconde position de soupape et le mouvement descendant (17) est ainsi inversé au mouvement montant (19),
**caractérisé en ce qu'**une commutation de course active (50) est prévue, laquelle comprend un cylindre de commutation (51) à l'extrémité supérieure du cylindre de moteur (10) et un piston de commutation (52), lequel est disposé mobile dans le cylindre de commutation (51) et est accouplé à l'unité de soupape (30) à l'intérieur du cylindre de moteur (10) afin de permettre la commutation de l'unité de soupape (30) pour une inversion du sens de course du piston de moteur (11) au moyen d'un mouvement actif du piston de commutation (52).

2. Moteur pneumatique (1) selon la revendication 1, **caractérisé en ce qu'**un axe de mouvement du piston de commutation (52) coïncide avec un axe de mouvement du piston de moteur (11).

3. Moteur pneumatique (1) selon la revendication 1 ou 2, **caractérisé en ce que** la commutation de course active (50) comprend une soupape de commutation (57) qui assure un mouvement descendant du piston de commutation (52) dans une première position de commutation et un mouvement montant du piston de commutation (52) dans une seconde position de commutation.

4. Moteur pneumatique (1) selon la revendication 3, **caractérisé en ce que** la soupape de commutation (57) dépressurise le piston de commutation (52) dans une troisième position de commutation.

5. Moteur pneumatique (1) selon l'une des revendications 1 à 4, **caractérisé en ce qu'**un mécanisme de culbuteur (70) présentant un accumulateur d'énergie est prévu, lequel mécanisme de culbuteur est relié au piston de commutation (52) et agit sur l'unité de soupape (30).

6. Moteur pneumatique (1) selon l'une des revendications 1 à 5, **caractérisé en ce que** les moyens de butée supérieurs comprennent une butée d'extrémité supérieure fixe au niveau du cylindre de commutation (51) et **en ce que** les moyens de butée inférieurs comprennent une butée d'extrémité inférieure fixe au niveau du cylindre de commutation (51).

7. Moteur pneumatique (1) selon l'une des revendications 1 à 6, **caractérisé en ce que** la commutation active de course (50) comprend une commande (56) et un premier commutateur de proximité (61) disposé sur le cylindre de commutation, la commande (56) étant conçue pour commuter la soupape de commutation (57) dans la première position de commutation lorsque le piston de commutation (52) atteint le premier commutateur de proximité (61) dans le mouvement montant.

8. Moteur pneumatique (1) selon la revendication 7, **caractérisé en ce que** la commutation de course (50) comprend un second commutateur de proximité (62), la commande (56) étant conçue pour commuter la soupape de commutation (57) dans la deuxième position de commutation lorsque le piston de commutation (52) atteint le second commutateur de proximité (52) dans le mouvement descendant.

9. Moteur pneumatique (1) selon la revendication 8, **caractérisé en ce que** la commande (56) est conçue pour maintenir temporairement la soupape de commutation (57) dans la première position de commutation ou dans la deuxième position de commutation.

10. Procédé de fonctionnement d'un moteur pneumatique (1) selon l'une des revendications 1 à 9, **caractérisé en ce que** la force agissant par le piston de commutation (52) est supérieure à la force nécessaire pour commuter l'unité de soupape (30).
